# FASCICULE DE BREVET EUROPEEN

(11) **EP 2 997 809 B1**
(45) Date de publication et mention de la délivrance du brevet: **22.11.2017**
(21) Numéro de dépôt: 15306459.7
(22) Date de dépôt: 18.09.2015
(51) Int. Cl.: A01D 34/535

(54) **DISPOSITIF D'ACCROCHAGE D'UN FLÉAU**
AUFHÄNGEVORRICHTUNG FÜR EINEN DRESCHFLEGEL
DEVICE FOR COUPLING A FLAIL KNIFE

(30) Priorité: 19.09.2014 FR 1458878
(43) Date de publication de la demande: 23.03.2016
(73) Titulaire: Scopagreen, 88630 Soulosse Sous Saint-Elophe (FR)
(72) Inventeur: Gaudé, Simon, 88300 MONT LES NEUFCHATEAU (FR)
(74) Mandataire: Rhein, Alain

(56) Documents cités:
- DE-U1- 8 704 846
- US-A- 3 831 359

## Description

La présente invention a pour objet dans des perfectionnements apportés aux machines comportant un organe actif pour couper et/ou ramasser et un dispositif de collecte des déchets.

Elle concerne le domaine des machines où l'organe actif peut être tracté ou porté, plus particulièrement, mais non exclusivement, les machines où il est embarqué en sorte que l'invention s'adresse plus particulièrement, mais non limitativement, aux machines automotrices.

Dans ce domaine, l'invention concerne particulièrement le dispositif d'accrochage d'un fléau sur un rotor à fléaux.

On connaît déjà des véhicules de ce type pour la tonte et le ramassage destinés à l'entretien de grandes surfaces, parcs, jardins publics, terrains de sports et autres.

Dans des machines connues, la tonte et/ou le ramassage s'exécutent au moyen d'un organe actif qui occasionne une coupe par percussion et/ou une aspiration en amont des outils.

Dans des machines connues, selon leur genre, le transfert de déchets végétaux entre l'organe actif et la cuve de collecte s'effectue soit par une soufflerie, créée par l'organe actif lui-même agencé de façon appropriée, flux d'air fréquemment rehaussé par une turbine, soit par un dispositif de vis sans fin, dispositifs qui véhiculent les déchets végétaux dans une goulotte dont l'extrémité débouche dans la partie supérieure de la cuve.

Un inconvénient primordial de ces machines connues est l'altération des flux aérauliques et du transfert concomitant des déchets en amont et en aval des outils de coupe en présence de fortes densités végétales et/ou d'humidité.

Les machines connues, comportant des dispositifs de tonte à lames rotatives horizontales et de ramassage, génèrent un flux aéraulique ascendant, entre le sol et les lames, favorable au redressement des graminées et à la coupe par percussion. Toutefois, la gestion des flux chargés de déchets au-dessus du plan formé par les lames est complexe. Dans ces carters de tonte, situés à l'avant ou dans l'empattement du véhicule, les écoulements doivent être dirigés vers une section de sortie propice à l'éjection des déchets, en vue du ramassage. Ces écoulements sont sensibles aux formes et volumes des carters, et aux vitesses de rotation des lames. Ces paramètres conditionnent au sein du carter, les pressions d'aspiration, de refoulement et, par conséquent, les cycles d'air pour le transfert des déchets de tonte. L'humidité, la forte densité ou la surabondance du végétal sont les facteurs les plus négatifs de ce principe de fonctionnement. Leurs présences favorisent la formation d'agglomérats lourds, l'adhérence des déchets sur les parois, et réduisent les volumes nécessaires aux phénomènes aérauliques adéquats. Ce phénomène, qualifié de colmatage de l'enveloppe du carter, engendre une augmentation des pressions, altère l'énergie cinétique des déchets transmise par les lames, et, dégrade sensiblement la qualité de coupe ou le ramassage des résidus de tonte et autres déchets végétaux. Ces facteurs sont de surcroîts défavorables aux procédés de ramassage employés sur ces véhicules. Que le système de transfert des déchets soit constitué par un dispositif à turbine ou par éjection directe, l'orientation des projections des déchets issus des carters de tonte, les sections de passage plus faibles que les largeurs de travail des carters de tonte, la présence de coudes, la longueur et l'état de surface des conduits, et la différence de hauteur entre le carter de tonte et la cuve, sont des singularités sources de pertes de charge ou « perte de puissance d'aspiration » générant des bourrages et colmatages au sein de ces dispositifs. Ces phénomènes, dans les dispositifs de tonte et de ramassage, caractérisent les difficultés récurrentes des tondeuses à lames horizontales lors des conditions difficiles de début et fin de saison d'entretien des espaces verts caractérisées par les fortes pousses des graminées, des taux d'hygrométrie importants, la présence des feuilles mortes, ou par de nouvelles pratiques telles les fauches tardives. Ces phénomènes imposent invariablement une intervention manuelle pour désobstruer et/ou décolmater les différents composants. La perte de productivité peut alors être importante, voire totale en cas de colmatages intempestifs.

On connait également des machines à couteaux de type fléaux de tonte où une multitude de lames verticales et articulées tournent autour d'un axe horizontal au plan formé par le sol et transversal au sens d'avancement au sein d'un carter frontal, telles que décrites dans le brevet allemand DE 19607350 A1. En comparaison au dispositif de tonte à lames horizontales précédemment cité, le flux d'air rotatif généré par l'organe actif est antinomique au redressement des graminées nécessaire à la coupe par percussion. Dans l'interaction sol/végétaux/machine opérant sous les carters de tonte, ce balayage des graminées est moins approprié, et fournit une tonte de qualité moindre avec une coupe moins homogène et plus irrégulière. Ce principe de tonte est de fait souvent assimilé à de la fauche. À l'inverse pour le convoyage des déchets après la ligne de coupe, ce type de rotor génère un mouvement des lames favorable en raison du transfert d'énergie aux déchets et aux flux de ventilation, la projection mécanique se combinant, au phénomène d'aspiration-soufflerie. De plus, en raison d'un nombre conséquent de lames, il offre une linéique de coupe plus important, cinq à dix fois supérieure, permettant une meilleure gestion de la densité végétale. La configuration des machines du genre présente cependant un carter de tonte situé à l'avant du véhicule qui ne met pas à profit l'énergie et l'aéraulique transmises aux déchets. Cette configuration, nécessite un dispositif de transfert constitué de vis hélicoïdales transversales et longitudinales, positionnées dans des goulottes et tube de convoyage pour transporter les déchets dans la cuve. Ce dispositif, à l'instar de tout autre système de transfert constitué d'éléments mécaniques, est énergivore, et affiche une section de passage restreinte ayant pour conséquence l'engorgement du dispositif en cas de surabondance de déchets ou de forte humidité. Ce dispositif, sensible dans un environnement agressif, subit, fréquemment des chocs violents causés par des débris massiques lors de tonte sur des terrains faiblement entretenus, entrainant une usure prématurée des constituants, des pannes ou des casses, génératrices d'entretiens et de maintenances supplémentaires.

Un autre inconvénient de ces machines connues à couteaux de type fléaux réside dans leur dispositif connu d'accroche des fléaux. Ces derniers sont sans outillage particulier, ils ne permettent pas de retirer aisément ces multiples couteaux pour procéder à leur affutage ou leur remplacement en cas de détérioration. Ces dispositifs d'accroche comportent principalement et de façon simplifiée une manille et un couteau de type fléau présentant l'un ou l'autre une ouverture pour l'insertion du couteau dans la manille. Il est avéré à l'usage que la pièce présentant l'ouverture subit une déformation du fait des fortes contraintes provenant de chocs. Cette déformation est caractérisée du fait que la manille affiche le plus souvent, une résistance mécanique bien plus importante que le fléau par :
- soit, selon des efforts centrifuges, une torsion et parfois même une rupture du fléau en raison de la fragilité du couteau conséquente d'un manque de matière,
- soit, selon des efforts centripètes suite à des recours d'efforts consécutifs à ces chocs, un repli de la manille sur elle-même au niveau de son ouverture.
Ces déformations occasionnent respectivement soit, une projection du couteau en cas de rupture, source de danger, soit une inefficacité du principe d'accroche sans outillage.

Un autre inconvénient de ces machines connues indépendamment du genre réside dans le fait que le suivi de terrain des carters de tonte est conditionné à un plan de travail, dans lequel évolue l'organe actif qui, selon la technique, présente un plan ou une ligne de coupe, plan de travail dont la largeur est définie par des dispositifs d'appui au sol implantés le plus souvent à l'avant et/ou à l'arrière des carters. On conçoit aisément que toutes irrégularités locales d'un terrain, d'étendues ou de grandeurs inférieures à celles du plan de travail, pourront être assujetties à un scalpage ou à un manque d'exécution de l'organe actif.

Un autre inconvénient de ces machines connues indépendamment du genre réside dans le fait que les déchets végétaux, en aval du dispositif de transfert, sont simplement déversés, de façon locale, sans compactage et sans broyage préalable, dans la cuve de collecte, occupant un volume relativement important. Ainsi, l'autonomie de ramassage s'en trouve limitée, d'autant plus que ces machines par construction sont équipées de cuve de dimensions généralement restreintes, imposant des allers-retours incessants entre la zone de travail et le point de collecte. Ce va-et-vient affectant considérablement la productivité des machines.

On connait aussi d'autres machines du genre à couteaux de type fléaux de tonte, telles que décrites dans le brevet US-A-3831359 ou le brevet français FR 1.422.000. Ce dernier met pleinement à profit l'énergie mécanique et l'aéraulique générées par l'organe actif pour le transfert des déchets, en proposant une éjection directe en raison du positionnement ventral de ses outils de coupe, et de l'ouverture du carter sur sa partie supérieure. La configuration des machines du genre n'offre cependant aucun dispositif pour la mobilité de la ligne de coupe, du suivi de terrain, du réglage.

L'invention a donc essentiellement pour but de remédier aux inconvénients susmentionnés et de perfectionner les machines du genre pour qu'elles répondent mieux que jusqu'à présent aux diverses exigences de la technique. L'invention vise à faire en sorte notamment que la tonte et le ramassage simultanés soient réalisés, quelle que soit la densité végétale, en herbes hautes ou courtes, en présence de feuilles mortes, de brindilles, détritus, déchets, et/ou quelles que soient les conditions climatiques, par temps sec ou par forte humidité, afin d'obtenir un emploi effectif et productif toute la saison, et adapté aux nouvelles pratiques, telles la gestion différenciée des espaces verts ou les fauches tardives. L'invention pouvant être utilisée pour du seul ramassage sur des surfaces souples attenantes aux espaces verts, telles des zones présentant des surfaçages fins type concassés calcaires, siliceux ou schisteux, tels des boulodromes, pistes piétonnières, sentiers ou autres aires récréatives et de loisirs, ainsi que toutes sortes de revêtements synthétiques. L'invention peut être utilisée aussi pour du ramassage sur des surfaces plus dures, telles les enrobés attenant aux espaces verts ainsi que des stabilisés plus grossiers.

La présente invention a pour but de proposer une machine répondant aux critères suivants :
a.automoteur compact,
b.polyvalent pour la tonte et/ou le ramassage selon la nature des espaces à traiter,
c.oeuvrant indépendamment de la densité végétale et/ou de l'humidité,
d.gérant concomitamment les flux aérauliques avant et après la ligne de coupe,
e.faisant fi de tout phénomène de bourrage et/ou colmatage,
f.embarquant, une forte capacité de collecte des déchets,
g.protégeant l'exécution de manière fiable, même sur terrains accidentés, contre tout arrachement accidentel et scalpage, ou, contre tout oubli et manque,
h.limitant la dégradation des graminées en raison de l'interaction forte machine/milieu.
   L'objectif de compacité s'entend par l'obtention d'un véhicule possédant, une hauteur hors-tout limitée pour offrir une vision panoramique à l'opérateur,
i. une largeur hors-tout minimale au regard de la largeur de travail,
j.des dimensions similaires aux véhicules de ces catégories,
k.une capacité de collecte plus notoire.

Un autre objectif consiste à préserver un environnement sain au poste de conduite et à proximité du véhicule.

Un autre objectif consiste à conserver une garde au sol conséquente pour le franchissement des bordures et trottoirs pour transiter des espaces verts aux petites voiries attenantes aux précédents.

Pour atteindre ces objectifs, il a fallu sur un véhicule automoteur, contrairement aux habitudes du métier, concevoir un volume de transfert de grandes dimensions, pour le convoyage des déchets, reliant, sans aucun organe intermédiaire autre que l'enveloppe de ce volume, les fonctionnalités mobiles de tonte et/ou ramassage, basées sur une technologie du genre à couteaux de type fléaux de tonte, à la fonctionnalité collecte, mettant à profit les énergies et aérauliques transmises aux déchets et limitant les singularités lors du convoyage. Ces dispositifs d'éléments, mobiles les uns vis-à-vis des autres, scindant le véhicule en deux parties distinctes, ont nécessité de résoudre de nombreuses problématiques structurelles, cinématiques, de gestion des flux aérauliques, des passages hydrauliques.

Ainsi, la machine automotrice à tondre et/ou ramasser pour l'entretien des espaces verts et, des petites voiries ou surfaces attenant aux espaces verts, selon l'invention, comporte un châssis reposant sur un essieu avant et un essieu arrière, un poste de conduite et une unité de travail, située dans l'empattement du véhicule, au sein de laquelle un organe actif composé d'un rotor motorisé ayant un axe horizontal parallèle au plan formé par le sol et transversal au sens d'avancement du véhicule, et muni de couteaux ou fléaux, ventilés et articulés, de sorte quel l'activation de l'organe actif selon la surface à traiter autorise la tonte et/ou la collecte des déchets. Ladite machine automotrice se caractérise en ce que ladite unité de travail est rendue mobile au travers d'un dispositif flottant de suivi de terrain rétractable et réglable, et est conformée pour projeter directement, sans aucun organe intermédiaire, les produits coupés et/ou ramassés vers un dispositif de collecte des déchets.

De façon préférentielle, l'unité de travail est mobile au moyen d'un dispositif flottant de suivi de terrain comportant un dispositif oscillant et un dispositif d'appui au sol.

De façon préférentielle, le dispositif oscillant de l'unité de travail réalise une cinématique de type parallélogramme, permettant d'une part à ladite unité d'épouser les variations, autour d'un plan neutre défini par les roues, générées par les dénivellations et irrégularités locales du terrain au moyen d'un appui au sol, et d'autre part de relever ladite unité dans une position rétractée afin de garantir une garde au sol maximale.

De façon préférentielle, le dispositif oscillant est principalement composé par deux bras mécaniques inférieur et supérieur de longueurs égales et parallèles, implantés respectivement à leurs extrémités au châssis et à l'unité de travail au moyen de quatre liaisons de type pivot.

De façon préférentielle, le dispositif oscillant est rétractable au moyen d'un vérin de relevage et d'une pièce de renvoi articulée par une liaison de type pivot générant un appui linéique sur le bras mécanique supérieur.

De façon préférentielle, le dispositif d'appui au sol est composé principalement d'un rouleau palpeur.

De façon préférentielle, le dispositif d'appui au sol est réglable et définit la hauteur de travail de l'organe actif au moyen de l'allongement ou du raccourcissement de deux assemblages brochés et d'un système composé de sabots, de renvois d'angle et de tringles.

De façon préférentielle, les deux assemblages brochés sont constitués d'une tige creuse et pleine, percées chacune de plusieurs trous, et pouvant glisser l'une dans l'autre, l'alignement et la combinaison des différents orifices et l'insertion d'une goupille mécanique offrant une plage de multiples hauteurs de travail.

De façon préférentielle, le réglage du dispositif d'appui au sol bascule le rouleau autour d'une liaison pivot pour le positionner sous l'unité de travail au plus proche de la ligne de coupe.

De façon préférentielle, le dispositif d'appui au sol est rétractable au moyen d'un vérin hydraulique double corps fixé sur l'unité de travail.

D'une autre façon préférentielle, le dispositif flottant de suivi de terrain comporte de plus une roulette de voirie rétractable, montée dans une chape mobile en pivotement au moyen d'un vérin fixé sur l'unité de travail.

De façon préférentielle, le rouleau palpeur et la roulette de voirie peuvent être montés ensemble sur l'unité de travail.

De façon préférentielle, le rouleau palpeur et la roulette de voirie peuvent être actionnés alternativement au moyen d'un jeu approprié de cartouches hydrauliques permettant de passer instantanément à l'entretien d'une surface souple à une surface dure.

De façon préférentielle, les vérins de la roulette de voirie et du rouleau palpeur sont alimentés par un accumulateur hydraulique.

De façon préférentielle, l'unité de travail est munie d'un déflecteur s'étendant sensiblement en aval et à hauteur de la ligne de coupe de l'organe actif, et, présentant une forme dont les surfaces s'opposent au flux d'air rotatif, permettant de limiter le phénomène de soufflerie/balayage et de créer une surpression à l'arrière du déflecteur, et inversement, sensiblement à la base de ladite ligne de coupe, une zone dépressionnaire concourant à un fort phénomène d'aspiration au passage des lames, relevant ainsi les graminées lors de travaux de tonte et favorisant la coupe par percussion et/ou optimisant la succion des déchets quelle que soit la hauteur de travail ou le revêtement du sol pratiqué.

De façon préférentielle, le dispositif d'accroche des couteaux ou des fléaux comporte de façon multiple un support de manille en forme de tube dans lequel est insérée une manille et sur laquelle est sont introduits un ou plusieurs fléaux ou couteaux.

De façon préférentielle, la manille présente une partie linéique dont l'extrémité est filetée pour accueillir un écrou et une partie courbe de type boucle dont la section de l'extrémité est quasi tangente à la surface de révolution externe du support laissant un jeu fonctionnel minime.

De façon préférentielle, le ou les couteaux ou fléau x ne présentent pas d'ouverture.

De façon préférentielle, le support de manille présente un méplat permettant d'introduire par son épaisseur un fléau.

De façon préférentielle, le méplat du support de manille présente une surface parallèle à un plan transversal passant par les centres du rotor et du support et déportée de ce plan dans le sens donné par la rotation de l'organe actif d'une distance suffisante de manière à ce que lorsque la manille se trouve dans un angle déterminé, le jeu fonctionnel entre l'extrémité de la manille et du méplat soit légèrement supérieur à l'épaisseur du fléau.

De façon préférentielle, l'unité de travail mobile possède dans sa partie supérieure un canal d'éjection directe des déchets avec une section de passage de largeur équivalente à la largeur de travail de l'organe actif.

De façon préférentielle, le bac de ramassage s'étend sensiblement sur la moitié arrière de la machine et présente un volume frontal dans lequel d'une part, une tôle déflectrice, dans sa partie supérieure, dirige les déchets à l'arrière du bac de ramassage et d'autre part, une section d'entrée de largeur équivalente à la largeur de travail de l'organe actif, dans sa partie inférieure.

De façon préférentielle, le bac de ramassage comporte, d'une part, dans la partie arrière de son enveloppe de multiples orifices de sortie pour lesquels la section global est supérieure à la section de passage du canal d'éjection, afin de limiter les phénomènes de surpression, et, d'autre part, dans la partie inférieure de son enveloppe, des décrochements de son enveloppe brisant selon le taux de remplissage dudit bac de ramassage les phénomènes turbulents tourbillonnaires.

De façon préférentielle, le dispositif de collecte est, muni d'un déflecteur canalisant le refoulement, d'air en sortie dudit dispositif et canalisant ledit refoulement vers le sol.

De façon préférentielle, la trajectoire de l'unité de travail, conféré par le dispositif oscillant, autorise le débattement vertical de son canal d'éjection au sein du volume frontal du bac de ramassage.

De façon préférentielle, le canal d'éjection présente une inflexion sur sa tôle déflectrice.

De façon préférentielle, les tôles déflectrices du canal d'éjection et du bac de ramassage sont tangentes lorsque l'unité de travail est rétractée.

De façon préférentielle, le canal d'éjection de l'unité de travail se meut au sein d'une goulotte d'acheminement sur laquelle repose le bac de ramassage, afin d'assurer une étanchéité entre l'unité de travail mobile et ledit bac en cas d'éventuels refoulements.

L'invention sera mieux comprise à la lecture de la description qui suit d'un mode de réalisation non limitatif de l'invention, faite en référence aux figures annexées suivantes :

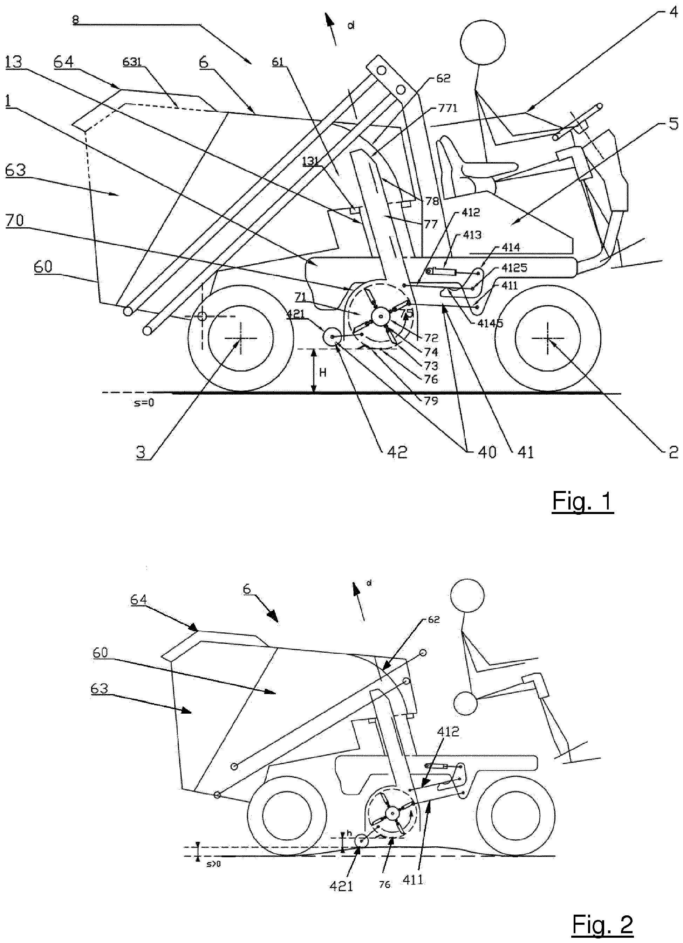

- Figure 1 : Vue schématique de la machine en mode déplacement.
- Figure 2 : Vue schématique de la machine en mode travail avec dénivellation positive s>0.

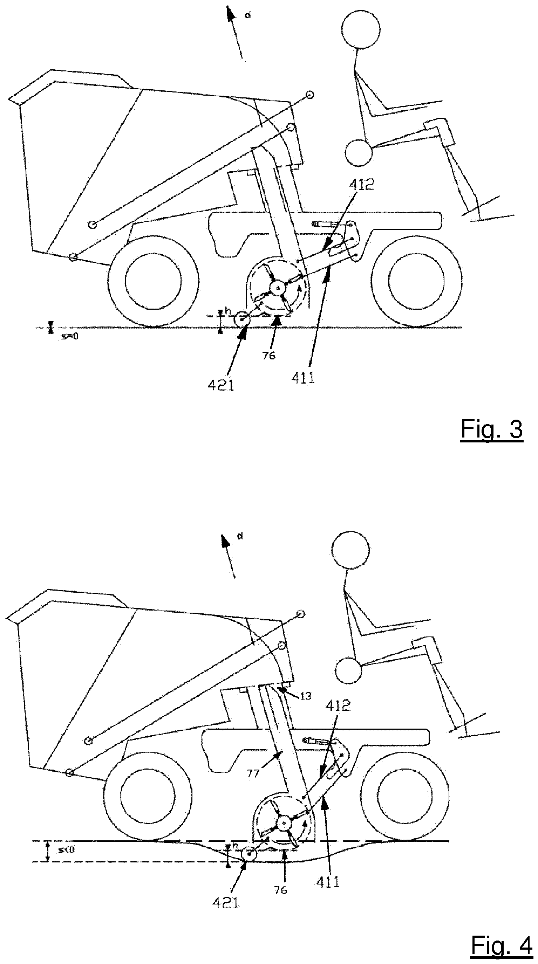

- Figure 3 : Vue schématique de la machine en mode travail sans dénivellation s=0.
- Figure 4 : Vue schématique de la machine en mode travail avec dénivellation négative s<0.

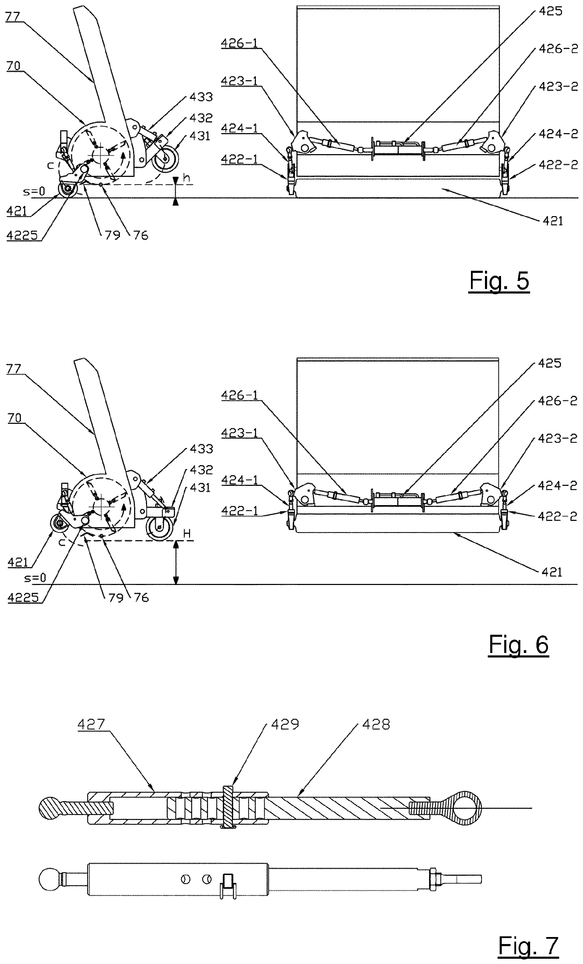

- Figure 5: Dispositif d'appui au sol en mode travail.
- Figure 6 : Dispositif d'appui au sol en mode déplacement.
- Figure 7 : Vues techniques des assemblages brochés.

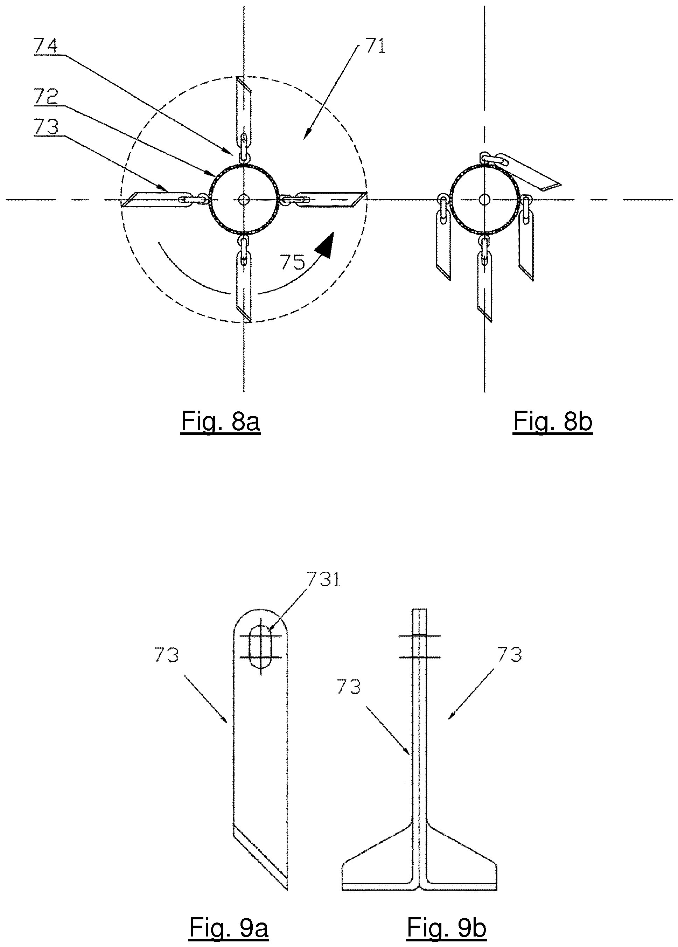

- Figures 8 : Organe actif dans son ensemble en rotation (8a) et à l'arrêt (8b).
- Figures 9 : Vues techniques des couteaux (9a) ou fléaux de tonte (9b).
- Figures 10 : Vue partielle de l'organe actif (10a) et de la mise en place des couteaux ou fléaux de tonte (10b) sur l'organe actif.
- Figures 11 : Vues techniques partielles de l'organe actif (11a, 11b, 11c).

En référence aux dessins, on peut voir, une machine automotrice qui comporte un châssis 1 monté sur un essieu avant 2 et un essieu arrière 3 , portant à l'avant un bloc moteur 4 et un poste de pilotage 5 , et à l'arrière, un dispositif de collecte des déchets 6.

Une unité de travail mobile 70 située dans l'empattement du véhicule, comprend un organe actif 71 formé principalement par un rotor 72 ayant un axe horizontal parallèle au plan formé par le sol et transversal au sens d'avancement du véhicule 8 , motorisé et muni, sensiblement sur toute la largeur de l'unité de travail 70, de couteaux ou fléaux 73 de tonte, ventilés et articulés, et de dispositifs d'accroche desdits couteaux ou fléaux 74.

Le véhicule 8 présente deux modes de fonctionnement, un mode de travail pour lequel l'unité de travail 70 est en appui au sol et un mode déplacement pour lequel ladite unité de travail 70 se trouve en position rétractée afin de garantir une garde au sol maximale H.

En mode travail, l'entraînement de l'organe actif 71 dans le sens de rotation 75 autorise la tonte et/ou le ramassage des déchets, et projette directement, sans aucun organe intermédiaire, les produits coupés et/ou ramassés vers le dispositif de collecte des déchets 60 .

En mode travail, la périphérie des couteaux ou fléaux de l'organe actif 71 détermine une ligne fonctionnelle 76 de coupe et/ou ramassage à l'aplomb de l'axe du rotor 72 dont la hauteur, dite hauteur de travail h , est obtenue au moyen d'un dispositif flottant de suivi de terrain, rétractable et réglable, défini dans son ensemble par la référence 40 .

L'unité de travail 70 comporte un canal d'éjection 77 dans sa partie supérieure. Ce canal d'éjection 77 présente une enveloppe formée particulièrement d'une tôle déflectrice 78 , coplanaire à un plan tangent à la périphérie des couteaux ou fléaux de l'organe actif 71 dont l'inclinaison détermine une direction optimale référencée d. L'inclinaison favorise l'éjection des déchets au regard de l'équilibre nécessaire entre les pressions d'aspiration, et, les pressions de refoulement entre les sections d'entrée et de sortie de l'unité de travail 70, à l'instar d'une turbine à palles. Elle favorise aussi la surface de contact la plus restrictive possible de la tôle déflectrice 78 propre à l'adhérence des déchets.

Les dimensions fonctionnelles de l'unité de travail 70 et de son canal d'éjection 77 occupent un encombrement identique et maximum sur la largeur du véhicule 8 afin d'éviter toute singularité dans le transfert des déchets.

La mobilité de l'unité de travail 70 est assurée au moyen d'un dispositif flottant de suivi de terrain 40 comportant un dispositif oscillant rétractable et un dispositif réglable et rétractable d'appui au sol, définie respectivement dans leurs ensembles par les références 41 et 42.

Le dispositif oscillant rétractable 41 garantit une cinématique de type parallélogramme, conférant à l'unité de travail 70 un mouvement de translation coplanaire au sol entre une position de travail dans laquelle ladite unité de travail est appliquée sur une surface à entretenir, et, une position de repos dans laquelle l'unité de travail 70 est maintenue distante de cette surface. Ce mouvement de translation permet d'obtenir en mode déplacement une mise en sécurité de l'unité de travail 70 pour faciliter le franchissement des trottoirs et bordures, par exemple, lors du passage du véhicule 8 des espaces verts aux petites voiries attenantes, et d'éviter tous risques éventuels de dégradation.

La translation coplanaire permet de garder quelle que soit la hauteur de travail h l'orientation du canal d'éjection 77 selon la direction optimale de projection d.

Le dispositif oscillant rétractable 41 est principalement composé par deux bras mécaniques inférieur 411 et supérieur 412 de longueurs égales, parallèles, implantés respectivement à leurs extrémités au châssis 1 et à l'unité de travail 70. L'implantation sur le châssis 1 est réalisée au moyen de quatre liaisons de type pivot dont celle référencé 4125. Ces deux bras 411 et 412 sont totalement non contraints mécaniquement en mode travail, hormis par les degrés de liberté non offerts par des liaisons de ce type, offrant une flottabilité de l'unité de travail 70 pour un suivi de terrain et une position optimale de la ligne fonctionnelle 76 de coupe et/ou de ramassage, évitant scalpage et oublis, selon une hauteur de travail h préalablement définie par le dispositif d'appui au sol 42, en compensant les dénivellations éventuelles du sol par rapport au plan formé par les essieux.

Le débattement angulaire des bras 411 412 et l'implantation des quatre liaisons de type pivot, selon un choix de conception, permettent une course de l'unité de travail 70 autorisant un suivi de terrain négatif, et également la mise en sécurité de ladite unité 70, selon une trajectoire quasi-rectiligne parallèle à la direction de projection d limitant l'amplitude des déplacements longitudinaux de ladite unité 70 selon le sens d'avancement du véhicule 8 et par là même les volumes de jeux fonctionnels nécessaires au déplacement de ladite unité 70 et de son canal d'éjection 77 au sein d'autres ensembles constitutifs de la machine, tels la goulotte d'acheminement 13 ou du bac de ramassage 60 .

Ces volumes de jeux fonctionnels restreignent les espaces par lesquels un éventuel refoulement de bac de ramassage 60 pourrait circuler.

L'unité de travail 70 traînée au regard de sa liaison mobile avec le châssis 1 située à l'avant du véhicule 8, et, sa liberté de déplacement en mode travail autorisent l'escamotage de ladite unité 70 en présence d'obstacles importants.

Le dispositif oscillant 41 assure le relevage de l'unité de travail 70 en ce qu'il comporte un vérin 413 de relevage simple et une pièce de renvoi 414 articulée par la liaison de type pivot 4125 et un appui linéique 4145 sur bras mécanique supérieur 412.

En mode déplacement, l'activation du vérin simple 413 génère la sortie de la tige et la rotation de la pièce de renvoi 414 autour de son pivot 4125. L'appui linéique 4145 exerce un couple sur le bras supérieur 412, l'entraînant en rotation autour de cette même liaison pivot 4125, forçant l'unité de travail 70 à se relever. En mode déplacement, la chambre du vérin 413 n'est plus alimentée en huile, la course du vérin 413 est libre, les efforts et couples de la liaison linéique 4145 étant nuls, seuls le poids de l'unité de travail 70 et la résultante au sol de son dispositif d'appui 42 régissent l'unité de travail 70 sur la composante verticale. Ce désaccouplement du bras 412 concours à la liberté de déplacement de l'unité de travail 70 selon les dénivellations du terrain.

Le dispositif flottant de suivi de terrain 40 de l'unité de travail 70 est complété par un dispositif d'appui au sol 42 , compact, réglable et rétractable, définissant la hauteur de travail h de l'organe actif 71 .

Le dispositif d'appui au sol 42 est caractérisé en ce qu'il comporte un rouleau palpeur 421 monté au moyen de paliers à deux sabots 422-1 422-2 fixés à l'unité de travail 70 par deux liaisons pivots 4225. Lesdits sabots 422-1, 422-2 sont liés à des renvois d'angle 423-1, 423-2 à l'aide des tringles 424-1, 424-2 munies à leurs extrémités de rotules, lesdits renvois d'angles 423-1,423-2 étant eux-mêmes liés à des assemblages brochés désignés dans leurs ensembles par les références 426-1 426-2 dotés de rotules à leurs extrémités et agissant comme des barres de longueurs fixes.

Le réglage de la hauteur du rouleau palpeur 421 par rapport à la ligne fonctionnelle 76 de coupe et/ou de ramassages s'effectue au moyen de l'allongement ou, inversement, du raccourcissement des deux assemblages brochés 426-1 426-2 . Lesdits assemblages brochés 426-1,426-2 sont constitués respectivement d'une tige creuse 427 et d'une tige pleine 428, percées chacune de plusieurs trous, et pouvant glisser l'une dans l'autre. L'alignement et la combinaison des différents orifices et l'insertion d'une goupille mécanique 429 offrent une plage de multiples hauteurs de travail, le brochage mécanique permettant ainsi un réglage mécanique, rapide d'exécution, indéréglable dans le temps pour une homogénéité optimale du travail.

Le raccourcissement des assemblages brochés 426-1,426-2 engendre les rotations des renvois d'angles 423-1 423-2 et des sabots 422-1 422-2 , et la remontée consécutive du rouleau palpeur 421 dans une trajectoire circulaire c autour des pivots 4225. À l'inverse, l'allongement desdits assemblages brochés 426-1,426-2 génère la rotation inverse des renvois d'angles 423-1 423-2 et des sabots 422-1 422-2 , rapprochant le rouleau palpeur 421 de la ligne fonctionnelle 76 sous l'unité de travail 70 selon la trajectoire circulaire c. Dans cette position, le rouleau palpeur 421 définit un plan de travail très court entre sa ligne d'appui au sol et la ligne fonctionnelle 76 permettant à l'organe actif 71 d'anticiper de brusques dénivellations et les scalpages sur des terrains localement accidentés.

Le dispositif d'appui au sol 42 est rétractable en ce qu'il comporte un vérin hydraulique double corps 425 dont les tiges, selon qu'elles soient activées ou désactivées apportent une mise en mouvement supplémentaire du rouleau palpeur 421 le long de la trajectoire circulaire c.

En mode déplacement, le retour des tiges dans le corps du double vérin 425 et les rotations supplémentaires des renvois d'angles 423-1 423-2 et des sabots 422-1 422-2 , génère une remontée plus conséquente du rouleau palpeur 421 contribuant à la mise en sécurité de l'unité de travail 70 dans son ensemble, en préservant une garde au sol importante. Inversement, en mode travail, la sortie des tiges en butée de corps du vérin 425 replace le rouleau palpeur 421 dans une position définie par le brochage mécanique.

Le rouleau palpeur 421 par son appui au sol et le poids de l'unité de travail 70 concourent au ré-appuyage ou ré-enracinement des stolons à la surface du sol, limitant, ainsi le décollement dudit système racinaire occasionné par le phénomène d'aspiration de tout système de coupe, et contribuant ainsi à la formation de nouveaux pieds par marcottage naturel. Ce dispositif d'appui au sol 42 par rouleau palpeur 421 présente l'avantage de rouler le gazon sur toute la largeur de travail et d'améliorer le tallage des graminées de manière uniforme.

Le dispositif d'appui au sol, comporte également pour une utilisation de la machine sur des surfaces plus dures, une roulette d'appui ou de voirie 431 pouvant se régler verticalement au moyen d'un filet,/taraud sur une chape intermédiaire 432 pour le réglage de la hauteur de travail. Ladite roulette d'appui 431 est orientable autour d'une liaison pivot sur l'unité de travail 70. Ladite roulette d'appui 431 est également associée à un vérin 433 permettant l'activation et la rétractation dudit dispositif 42.

Le rouleau palpeur 421 et la roulette d'appui 431, sont activables et rétractables 1 au moyen d'un jeu approprié de cartouches hydrauliques, permettant de passer instantanément à l'entretien d'une surface souple à une surface dure.

Pour une gestion optimale de l'interaction sol/végétaux/machine, l'unité de travail 70 est munie d'un déflecteur 79 qui s'étend sensiblement en aval et à hauteur de la ligne fonctionnelle de coupe 76 de l'organe actif 71, et qui présente une forme dont les surfaces s'opposent au flux rotatif permettant de limiter le phénomène de soufflerie/balayage et de créer une surpression à l'arrière du déflecteur 79, ainsi que, inversement, sensiblement à la base de ladite ligne fonctionnelle 76 de coupe et/ou de ramassage, une zone dépressionnaire concourant à un fort phénomène d'aspiration au passage des couteaux ou fléaux. Ce phénomène d'aspiration, relève les graminées lors de travaux de tonte, favorise la coupe par percussion, engendre une coupe régulière, et optimise la succion des déchets, quel que soient la hauteur de travail ou le revêtement du sol pratiqué.

La zone dépressionnaire favorise le flux d'air ascensionnel généré par la vitesse de rotation de bas en haut de l'organe actif 71 et concourent, à la projection des déchets tondus et/ou ramassés au sein de l'unité de travail 70 .

Pour pallier les problématiques susmentionnées pour l'accrochage sans outillage des fléaux de tonte, le dispositif d'accroche 74 de l'organe actif 7L comporte un rotor à fléaux 72 sur lequel est soudé de façon multiple un élément support 741 de forme globalement cylindrique. Dans lequel est inséré une manille 742. Ledit support de manille 741 présente un canal axial 7411 d'axe parallèle à celui dudit rotor à fléau 72.

Ladite manille 742 présente deux portions, l'une rectiligne 7421, dont l'extrémité libre est filetée pour accueillir un écrou non représenté qui limite la translation axiale de la manille 742 mais autorise sa rotation , et l'autre courbe et formant une boucle ouverte 7422.

Ladite portion rectiligne 7421 étant destinée à être introduite dans ledit canal axial 7411 et conformé pour pouvoir s'y mouvoir uniquement en pivotement.

Avantageusement, l'extrémité libre de la portion rectiligne 7421 de la manille 742 est filetée et garnie d'un écrou qui bloque ladite manille 742 en translation axiale tout en autorisant son pivotement au sein du canal axial 7411.

Selon l'invention, ladite boucle ouverte 7422 de la manille 742 présente une section d'extrémité quasi tangente à la surface de révolution externe de l'élément support 741 laissant un jeu fonctionnel minime.

Selon l'invention, ledit élément support 741 présente une paroi d'épaisseur « e » non constante.

De préférence , ladite paroi comporte en un secteur une épaisseur réduite localisée avantageusement à proximité du rattachement dudit élément support 741 sur le rotor 72.

Avantageusement, ladite épaisseur réduite est la conséquence d'un méplat 7415.

Ladite épaisseur réduite crée avec l'extrémité libre de la boucle ouverte 7422 de ladite manille 742, un espace e1 permettant le passage du fléau 73 et son accrochage à ladite boucle ouverte 7422, en passant par un trou 731 que comporte ledit fléau 73.

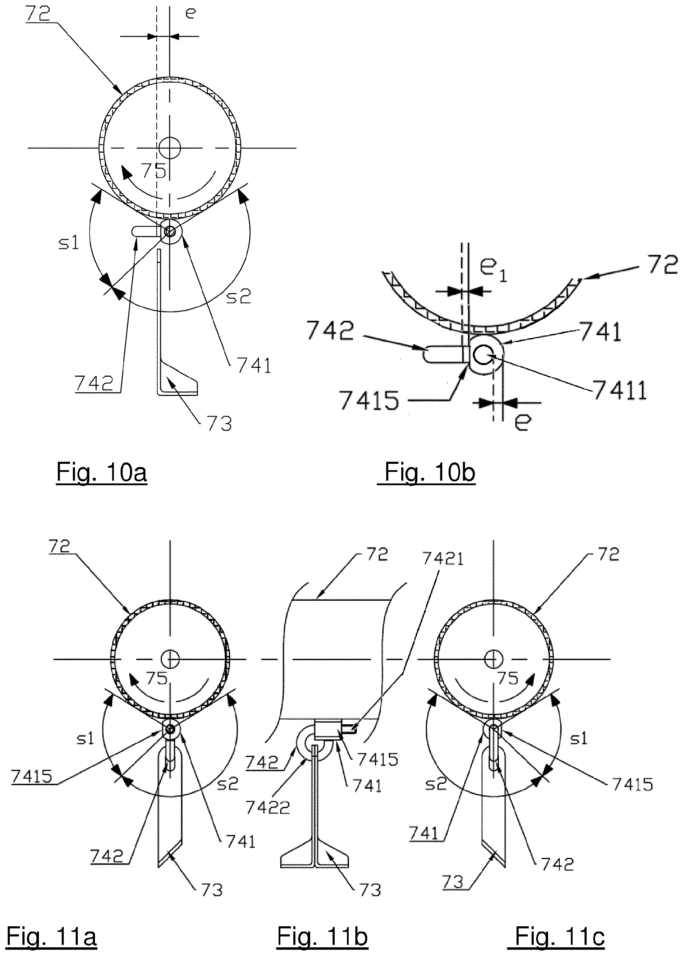

En d'autres termes tel qu'illustré sur les figures 10a et 10b, ledit élément support 741 présente, d'une part, dans le secteur slun méplat 7415 permettant d'introduire par son épaisseur un couteau ou fléau 73 sans ouverture et donc sans amorce de rupture éventuelle dans le dispositif d'accroche 74, et d'autre part, dans le secteur s2, une surface cylindrique s'opposant à la déformation et la fermeture éventuelle de la manille 742 sur elle-même.

Le méplat 7415 de l'élément support 741 de manille 742 présente une surface parallèle à un plan transversal passant par les centres du rotor 72 et de l'élément support 741. et déportée de ce plan dans le sens donné par la rotation de l'organe actif 71 d'une distance e suffisante de manière à ce que lorsque la manille 742 se trouve dans le secteur s1, le jeu fonctionnel entre l'extrémité de la manille 742 et du méplat 7415 soit légèrement supérieur à l'épaisseur du couteau ou fléau 73 .

Lors de l'entraînement de l'organe actif 71, l'alignement de la manille 742 et du couteau ou fléau 73, en raison de la force centrifuge exercée sur ceux-ci, empêche leurs positionnements dans le secteur s1, rendant impossible le décrochage du couteau ou fléau 73 et sécurisant ainsi la manille 742 d'un éventuel refermement en cas d'effort à caractère centripète par l'opposition de matière du support de manille 741.

Avantageusement, selon l'invention, ledit fléau 733 comporte une extrémité active de coupe opposée à son extrémité d'accroche sur ladite boucle 7422. L'extrémité d'accroche dudit fléau 73 comporte un trou 731, et est réalisée dans un fer plat.

Selon l'invention, l'espace permettant l'introduction du fléau 73 entre la manille 742, plus spécifiquement la boucle ouverte 7422, et l'élément support 741, est légèrement supérieur à l'épaisseur dudit fer plat.

Les formes du dispositif de collecte des déchets 60, plus spécifiquement du bac de ramassage 60, sont conditionnées par, d'une part, l'obtention d'un véhicule 8 offrant une vision périphérique pour l'utilisateur, avec un bac de ramassage 60 possédant une capacité deux à trois fois supérieure aux cuves des autoportées actuelles mais s'inscrivant dans la compacité des gabarits des véhicules standards, et d'autre part, pour la gestion des fortes vitesses des flux entrants au regard de son volume et l'optimisation des cycles aérauliques selon son taux de remplissage.

Le bac de ramassage 60 s'étend sensiblement sur la partie arrière de la machine et présente un volume frontal 61 dans lequel sur sa partie inférieure se situe une section d'entrée de largeur équivalente à la largeur de travail de l'organe actif 71.

Les déchets projetés par l'unité de travail 70 sont dirigés à l'arrière du bac de ramassage 60 au moyen de la tôle déflectrice 62 située dans la partie supérieure du volume frontal 61. La détente du fluide en sortie du canal d'éjection 77 , l'inclinaison légèrement montante et l'adhérence relative de la paroi supérieure du bac de ramassage 60 au regard de l'humidité résiduelle des déchets végétaux, ainsi que les orifices 631 du couvercle 63 agissent comme un système de décantation/filtration en déchargeant partiellement les flux d'air des déchets les plus lourds en suspension. Ceux-ci s'accumulent à l'arrière du bac de ramassage 60 et de fins orifices 631 disposés dans le volume supérieur du couvercle 63 permettent l'extraction des couches supérieures d'air, et limitent un phénomène de surpression. Les flux non extraits engendrent des cycles turbulents à l'intérieur du bac de ramassage 60, et compriment, les déchets par accumulation, strates après strates. Afin de limiter les phénomènes importants de turbulences, présents surtout dans les premiers moments du remplissage, l'enveloppe inférieure du bac de ramassage 60 présente des singularités pour briser la circulation de ces flux, évitant la création d'un mur d'air, créant aussi des zones tourbillonnaires à pressions relatives positives et négatives de part et d'autre des singularités. Ces décrochements de parois évitent également, lors de conditions climatiques sèches, le charriage des strates les plus récemment déposées par ces flux turbulents vers le cycle principal, mais aussi vers des zones mortes, et limitent les refoulements entre la section d'entrée du bac de ramassage 60 et la face arrière du canal d'éjection 77. Au fur et à mesure de l'accumulation, le flux primaire en provenance du canal d'éjection 77 prend le pas sur les cycles turbulents, permettant un remplissage intégral du bac de ramassage 60, hors passage du flux primaire, et déclenchant un capteur de remplissage, non présenté dans la présente invention.

Les couches supérieures d'air évacuées par les orifices 631 supérieures et latérales pouvant être chargées, selon les conditions climatiques, de fines particules de déchets végétaux et/ou de poussières, la présence d'une casquette 64 agissant comme un déflecteur, canalise le refoulement d'air en sortie du système bac 60/couvercle 63 et l'achemine vers le sol à l'arrière du véhicule 8, afin de travailler dans un environnement propre.

En position travail, le canal d'éjection 77 de l'unité de travail 70 se meut selon la trajectoire d à l'intérieur du volume frontal 61 du bac de ramassage 60 .

Le canal d'éjection 77 de l'unité de travail 70 est constitué d'une enveloppe dont la tôle déflectrice supérieure 781 présente une inflexion assurant le prolongement, en mode travail, de la tôle déflectrice 78 de la partie supérieure du bac de ramassage 60 , afin d'assurer une continuité du flux d'air ascendant chargé. Ce léger pincement dans la partie supérieure du canal d'éjection 77 présente l'avantage de resserrer la section aéraulique et les filets fluides et d'accroître la vitesse de ces derniers dans la section considérée pour augmenter le phénomène d'un mur d'air ainsi créé et d'éviter tout refoulement dans la partie haute du bac de ramassage 60.

En configuration déplacement, lorsque l'unité de travail 70 est rétractée, la bouche de sortie du canal d'éjection 77 et la tôle déflectrice 62 du bac de ramassage 60 présente un jeu minimal, afin d'obtenir une hauteur d'éjection la plus grande possible dudit canal 77 et assurer, en mode travail, un rendement maximal de remplissage du bac de ramassage 60 et un débattement aussi important que possible de l'unité de travail 70 dans le cadre du suivi de terrain de ce dernier.

L'unité de travail 70 et son canal d'éjection 77 se meuvent à l'intérieur d'une goulotte d'acheminement 13 fixée au châssis 1 composée principalement d'un joint 131 dans sa partie supérieure dans le plan de jonction avec le bac de ramassage 60 lorsque celui-ci est, en appui sur le châssis 1. La goulotte 13 a pour fonction d'assurer l'étanchéité entre l'unité de travail 70 et le bac 60 fixe dans une configuration travail dans la zone à proximité de l'opérateur. La goulotte 13 canalise les éventuels refoulements ou excédents de déchets et/ou poussières en provenance du bac 60 à l'arrière de l'unité de travail 70.

Scindé en deux volumes distincts par l'unité de travail 70, le véhicule 8 comporte un châssis 1 élémentaire composé deux longerons parallèles à la direction d'avancement, encadrant l'unité de travail 70 et définissant la largeur hors-tout de la machine, reliés par des traverses. Lesdits longerons joignant les parties avant et arrière du véhicule 8. Leurs profils en U apportent la rigidité nécessaire pour pallier aux contraintes mécaniques telles les flexions au regard des charges supportées ou des efforts renvoyés tels ceux exercés par les montants du dispositif d'élévation du bac de ramassage 60, les torsions au regard de l'irrégularité des terrains pratiqués, les vibrations des diverses éléments en rotation Ces profils en U autorisent l'intégration des lignes de flux électriques et hydrauliques alimentant l'arrière du véhicule 8 ainsi que des articulations mécaniques telle la liaison mobile entre le châssis 1 et l'unité de travail 70.

## Revendications

1. Rotor (72) à fléaux (73) comportant au moins un dispositif d'accrochage (74) pour fléau (73), ledit dispositif d'accrochage (74) comprend, d'une part, solidaire dudit rotor (72), un élément support (741) présentant un canal axial (7411) d'axe parallèle à celui dudit rotor (72), d'autre part une manille (742) présentant deux portions, l'une rectiligne (7421) et l'autre courbe et formant une boucle ouverte (7422), ladite portion rectiligne (7421) étant destinée à être introduite dans ledit canal axial (7411), **caractérisé en ce que** ledit élément support (741) est de forme globalement cylindrique et **en ce que** ladite portion rectiligne (7421) est conformée pour pouvoir se mouvoir dans ledit canal axial (7411) uniquement en pivotement, tandis que la paroi dudit élément support (741) présente une épaisseur (e) non constante, en sorte de comporter en un secteur une épaisseur réduite qui crée avec l'extrémité libre de la portion en forme de boucle (7422) de la ladite manille (742), un espace (e1) permettant le passage du fléau (73) et son accrochage à ladite boucle (7422), en passant par un trou (731) que comporte ledit fléau (73) à son extrémité opposée à celle active.

2. Rotor (72) à fléaux (73) selon la revendication 1, **caractérisé en ce que** la réduction d'épaisseur (e) de l'élément support (741) est localisée à proximité du rattachement de ce dernier au rotor (72), du côté vers lequel se déplace le fléau sous l'action du rotor.

3. Rotor (72) à fléaux (73) selon la revendication 1 ou la revendication 2, **caractérisé en ce que** l'élément support (741) est de forme cylindrique, tandis que la réduction d'épaisseur (e) de paroi est la conséquence d'un méplat (7415).

4. Rotor (72) à fléaux (73) selon l'une quelconque des revendications précédentes, **caractérisé en ce que** l'extrémité libre de la portion rectiligne (7421) de la manille (742) est filetée et garnie d'un écrou qui bloque ladite manille (742) en translation axiale tout en autorisant son pivotement.

5. Machine à tondre et/ou ramasser les déchets pour l'entretien des espaces verts comportant une unité de travail (70) dans laquelle se situe un organe actif (71) autorisant la tonte et/ou la collecte des déchets, **caractérisé en ce que** ledit organe actif (71) se compose dudit rotor (72) selon l'une quelconque des revendications précédentes, comportant au moins un dispositif d'accrochage (74) pour au moins un fléau (73).

## Patentansprüche

1. Rotor (72) für Dreschflegel (73), aufweisend mindestens eine Aufhängevorrichtung (74) für Dreschflegel (73), wobei die Aufhängevorrichtung (74) zum einen ein mit dem Rotor (72) fest verbundenes Halteelement (741), das einen axialen Kanal (7411) mit paralleler Achse zu der des Rotors (72) aufweist, zum anderen eine Öse (742), die zwei Abschnitte, einen geraden (7421) und einen anderen gebogenen aufweist, die einen offenen Ring (7422) bilden, umfasst, wobei der gerade Abschnitt (7421) dazu bestimmt ist, in den axialen Kanal (7411) eingeführt zu sein, **dadurch gekennzeichnet, dass** das Halteelement (741) eine allgemein zylindrische Form hat und dass der gerade Abschnitt (7421) ausgebildet ist, um sich in dem axialen Kanal (7411) nur drehend bewegen zu können, wogegen die Wand des Halteelements (741) eine nicht konstante Stärke (e) derart aufweist, dass sie in einem Sektor einen reduzierte Stärke aufweist, die mit dem freien Ende des ringförmigen Abschnitts (7422) der Öse (742) einen Raum (e1) bildet, der den Durchgang des Dreschflegels (73) und seine Aufhängung an dem Ring (7422) gestattet, mittels Durchgang durch ein Loch (731), das der Dreschflegel (73) an seinem Ende aufweist, das dem aktiven Ende gegenüberliegt.

2. Rotor (72) für Dreschflegel (73) nach Anspruch 1, **dadurch gekennzeichnet, dass** die Reduzierung der Stärke (e) des Halteelements (741) in der Nähe der Befestigung desselben am Rotor (72) auf der Seite lokalisiert ist, zu der sich der Dreschflegel unter der Wirkung des Rotors verlagert.

3. Rotor (72) für Dreschflegel (73) nach Anspruch 1 oder Anspruch 2, **dadurch gekennzeichnet, dass** das Halteelement (741) zylindrisch geformt ist, wogegen die Reduzierung der Stärke (e) der Wand die Folge einer Abflachung (7415) ist.

4. Rotor (72) für Dreschflegel (73) nach einem der vorangehenden Ansprüche, **dadurch gekennzeichnet, dass** das freie Ende des geraden Abschnitts (7421) der Öse (742) gewindet und mit einer Mutter versehen ist, die die Öse (742) in axialer Verlagerung bei Gestattung ihrer Drehung blockiert.

5. Maschine zum Mähen und/oder Sammeln von Abfällen für die Pflege von Grünanlagen, aufweisend eine Arbeitseinheit (70), in welcher sich ein aktives Organ (71) befindet, das das Mähen und/oder das Sammeln der Abfälle erlaubt, **dadurch gekennzeichnet, dass** sich das aktive Organ (71) aus dem Rotor (72) nach einem der vorangehenden Ansprüche zusammensetzt, aufweisend mindestens eine Aufhängevorrichtung (74) für mindestens einen Dreschflegel (73).

## Claims

1. A flail (73) rotor (72) including at least one catching device (74) for a flail (73), said catching device (74) comprises, on the one hand, secured to said rotor (72), a support element (741) having an axial channel (7411) with an axis parallel to that of said rotor (72), and on the other hand, a clevis (742) having two portions, one rectilinear (7421) and the other curved and forming an open loop (7422), said rectilinear portion (7421) being intended to be inserted into said axial channel (7411), **characterized in that** said support element (741) is globally cylindrical and **in that** said rectilinear portion (7421) is configured to be able to move in said axial channel (7411) only by pivoting, while the wall of said support element (741) has a non-constant thickness (e), so as to include a sector with a reduced thickness that creates, with the free end of the loop-forming portion (7422) of said clevis (742), a space (e1) allowing the passage of the flail (73) and its attachment to said loop (7422), by passing through a hole (731) included by said flail (73) at its end opposite the active end.

2. The flail (73) rotor (72) according to claim 1, **characterized in that** the thickness reduction (e) of the support element (741) is located near the attachment of the latter to the rotor (72), on the side toward which the flail moves under the action of the rotor.

3. The flail (73) rotor (72) according to claim 1 or claim 2, **characterized in that** the support element (741) is cylindrical, while the wall thickness reduction (e) is the result of a flat (7415).

4. The flail (73) rotor (72) according to any one of the preceding claims, **characterized in that** the free end of the rectilinear portion (7421) of the clevis (742) is threaded and trimmed with a nut that blocks said clevis (742) in axial translation while allowing it to pivot.

5. A machine for cutting and/or picking up waste to maintain green spaces including a work unit (70) in which an active member (71) is situated allowing the cutting and/or collection of waste, **characterized in that** said active member (71) is made up of said rotor (72) according to any one of the preceding claims, including at least one catching device (74) for at least one flail (73).
